# EUROPÄISCHE PATENTSCHRIFT

(11) **EP 0 978 743 B1**
(45) Veröffentlichungstag und Bekanntmachung des Hinweises auf die Patenterteilung: **07.03.2001**
(21) Anmeldenummer: 98810760.3
(22) Anmeldetag: 07.08.1998
(51) Int. Cl.: G02B 6/44

(54) **Vorrichtung zum Montieren einer Innenbride in einem nicht begehbaren Rohr**
Device for mounting a sleeve at the inside of a nonaccessible tube
Dispositif d'installation d'un chemisage à l'intérieur d'un tube non accessible

(43) Veröffentlichungstag der Anmeldung: 09.02.2000
(73) Patentinhaber: KA-TE System AG, CH-8041 Zürich (CH); Hecht, Reinhard, 93047 Regensburg (DE); Manstorfer, Karl, 93047 Regensburg (DE)
(72) Erfinder: Wyder, Hans, 8617 Mönchaltorf (CH); Häusermann, Christian, 8617 Mönchaltorf (CH); Hecht, Reinhard, 93047 Regensburg (DE); Manstorfer, Karl, 93047 Regensburg (DE); Bunschi, Hans, Dr.sc.techn., 8041 Zürich (CH); Weingarten, Marco, 8041 Zürich (CH)
(74) Vertreter: Patentanwälte Schaad, Balass, Menzl & Partner AG

(56) Entgegenhaltungen:
- EP-A- 0 626 232
- DE-A- 4 231 961
- DE-U- 29 700 912

## Beschreibung

Die Erfindung betrifft eine Vorrichtung zum Montieren einer Innenbride in einem nicht begehbaren Rohr. Sie betrifft ferner einen insbesondere zur Verwendung mit einer solchen Montagevorrichtung geeigneten Bridenwagen. Schließlich betrifft die Erfindung auch die Kombination aus einer solchen Montagevorrichtung und einem solchen Bridenwagen.

Aus der DE-U-29 700 912 ist es bekannt, Lichtwellenleiterkabel in nicht begehbaren Kanal- oder Rohrsystemen zu verlegen und mittels innenbridenartig ausgebildeten Befestigungselementen an der Rohrinnenwand zu befestigen. Die Verwendung derartiger Befestigungselemente hat den Vorteil, dass das Rohr nicht beschädigt werden muss, was beispielsweise beim Andübeln notwendig wäre. Als Befestigungsmittel der Befestigungselemente werden federvorgespannte Edelstahlringe vorgeschlagen, die sich an der Innenwand des Rohres andrücken und zweckmässigerweise über einen Umfangswinkelbereich von wenigstens 180° an der Rohrinnenwand anliegen. Zum Einsetzen dieser offenen Edelstahlringe in das Rohr kann ein mit einer Kamera ausgestatteter selbstfahrender, ferngesteuerter Roboter verwendet werden, der die vorgefertigten Befestigungsmittel aus einem mitgeführten Magazin entnimmt und in das Rohr einsetzt. Aufbau und Funktionsweise des Roboters im Detail gehen aber aus diesem Dokument nicht hervor.

Der Erfindung liegt die Aufgabe zugrunde, eine Vorrichtung zum Montieren einer Innenbride in einem nicht begehbaren Rohr sowie einen zur Verwendung mit einer solchen Montagevorrichtung geeigneten Bridenwagen zu schaffen.

Bezüglich der Montagevorrichtung wird diese Aufgabe durch die Merkmale des Anspruchs 1 gelöst.

Mit der erfindungsgemäßen Vorrichtung wird in verschiedenen Abschnitten auf die Innenbride eingewirkt, um diese in Umfangsrichtung betrachtet aufzuweiten und damit im nicht begehbaren Rohr zu montieren.

Die Vorrichtung ist insbesondere geeignet, eine in sich geschlossene Innenbride zu montieren, wie sie beispielsweise in der EP-Patentanmeldung 98 102 682.6 offenbart ist. Bezüglich Aufbau und Funktionsweise dieser Innenbride wird ausdrücklich auf diese Patentanmeldung verwiesen.

Bezüglich des Bridenwagens wird die Aufgabe durch einen Bridenwagen mit den Merkmalen des Anspruchs 14 gelöst.

Besonders bevorzugte Ausbildungsformen der Vorrichtung sowie des Bridenwagens sind in den abhängigen Ansprüchen angegeben.

Die Erfindung wird im folgenden anhand eines Ausführungsbeispiels unter Bezugnahme auf die Zeichnung näher erläutert; in dieser zeigen:
- Figur 1: eine schematische Darstellung einer in einem nicht begehbaren Rohr angeordneten Vorrichtung zum Montieren einer Innenbride mit zugeordnetem Bridenwagen, wobei das Rohr in Längsrichtung aufgeschnitten ist,
- Figur 2: eine vergrösserte, teilweise geschnittene Darstellung eines Teils der Montagevorrichtung,
- Figur 3: eine teilweise geschnittene Darstellung des Bridensetzmoduls der Montagevorrichtung, in der zudem die ihre Stützstellung einnehmenden Stützelemente zu erkennen sind,
- Figur 4: einen horizontalen Längsschnitt durch einen den Bridensetzmodul umfassenden Teil der Montagevorrichtung,
- Figur 5: einen Querschnitt durch den Bridensetzmodul der Montagevorrichtung,
- Figur 6: eine teilweise quergeschnittene Stirnansicht des Bridensetzmoduls von der Seite des zugeordneten Kupplungsrohres her betrachtet,
- Figur 7: eine schematische Teildarstellung des Bridensetzmoduls mit auf das Kupplungsrohr aufgesetztem Kupplungsadapter,
- Figur 8: eine schematische Teildarstellung des Bridensetzmoduls mit dargestellter Zylinder/Kolben-Einheit zum Betätigen der Haltebacken des Bridenkopfes,
- Figuren 9a - 9f: verschiedene Ansichten des Kupplungsbereiches zwischen dem Bridensetzmodul der Montagevorrichtung und dem Bridenwagen,
- Figur 10: eine Querschnittsdarstellung des Bridenwagens,
- Figur 11: eine schematische, teilweise quergeschnittene Ansicht des Bridenwagens,
- Figur 12: eine schematische Darstellung des seine Ruhestellung einnehmenden Bridenmagazins bei mit dem Bridensetzmodul gekoppeltem Bridenwagen,
- Figur 13: eine schematische Darstellung des seine Übergabestellung einnehmenden Bridenmagazins,
- Figur 14: eine schematische Darstellung des seine Übergabestellung einnehmenden Bridenmagazins, wobei das Förderorgan die vorderste Bride des Bridenstapels bereits hintergreift,
- Figur 15: eine schematische Darstellung des seine Übergabestellung einnehmenden Bridenmagazins mit durch das Förderorgan über den Bridensetzkopf geschobener vorderster Bride, und
- Figur 16: eine schematische Darstellung des wieder in seine Ruhestellung zurückbewegten Bridenmagazins, wobei der Bridensetzkopf die zuvor übergebene Bride bereits erfasst hat und das Förderorgan bereits wieder die vorderste Bride des verbleibenden Bridenstapels hintergreift.

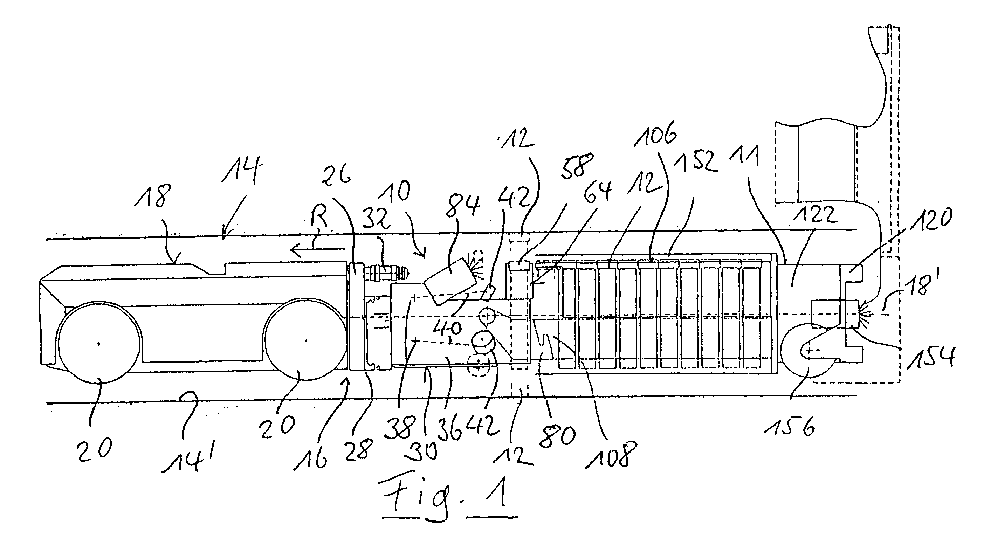

Die in den Figuren 1 bis 16 gezeigte Montagevorrichtung 10 mit zugeordnetem Bridenwagen 11 ist zum Montieren einer beispielsweise in Figur 1 gezeigten Innenbride 12 in einem nicht begehbaren Rohr 14 wie beispielsweise einem Abwasserrohr bestimmt. Ein Gestell 16 der Montagevorrichtung 10 umfasst ein ferngesteuertes, selbstfahrendes Kanalroboterfahrzeug 18, das über Räder 20 an der Rohrinnenwand 14' abgestützt ist und mittels eines im Kanalroboterfahrzeug 18 angeordneten Antriebsaggregats für die Räder 20 in Rohrlängsrichtung R bewegbar ist. Seitlich des Kanalroboterfahrzeugs 18 kann ein Messrad (nicht gezeigt) frei drehbar gelagert sein, das ebenfalls an der Rohrinnenwand 14' anliegt und mit einem Drehsensor (nicht gezeigt) verbunden sein kann, der zur Bestimmung des Ortes der Montagevorrichtung 10 im Rohr 14 seine Signale beispielsweise über ein Signal- und Speisekabel an eine ausserhalb des Rohrsystems angeordnete Überwachungs- und Steuereinrichtung weitergibt.

An der dem Bridenmagazin 11 zugewandten Stirnseite des Kanalroboterfahrzeugs 18 ist ein einer Dreheinrichtung des Kanalroboterfahrzeugs 18 zugeordneter, als Tragelement dienender Drehteller 26 um die Längsachse 18' des Kanalroboterfahrzeugs 18 drehbar gelagert. Im Kanalroboterfahrzeug 18 ist ein Drehantrieb für diesen Drehteller 26 untergebracht.

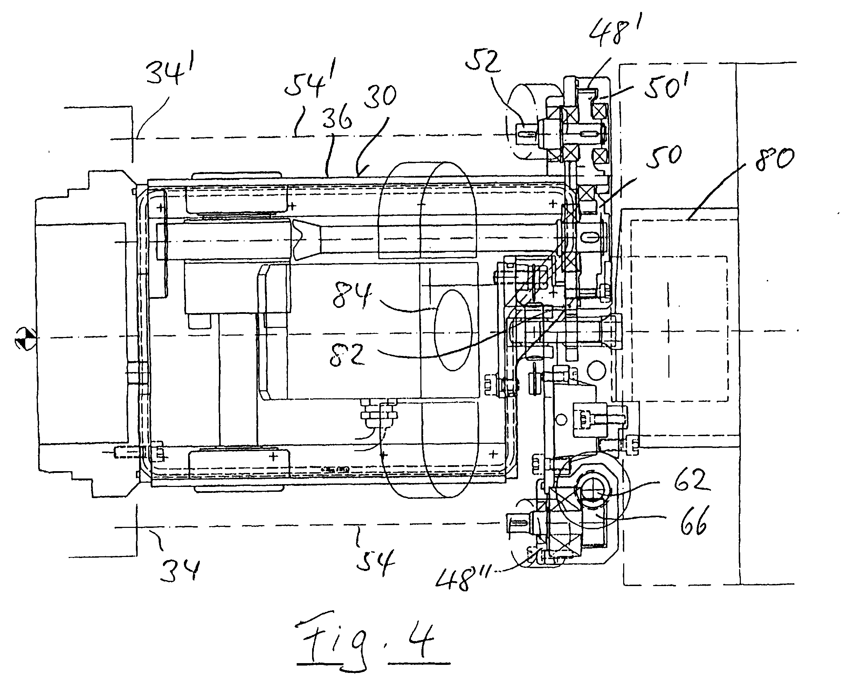

Über einen verriegelten Bajonettverschluss 28 ist am Drehteller 26 auslegerartig ein Bridensetzmodul 30 befestigt. Am Drehteller 26 können überdies Anschlüsse 32 für Steuer-, Speise- und Signalleitungen sowie eine Druckluftspeiseleitung vorgesehen sein. Zudem sind, wie am besten anhand der Figur 4 zu erkennen ist, an dem Drehteller 26 einander etwa diametral gegenüberliegend zwei Abgangswellen 34, 34' drehbar gelagert, die mit im Kanalroboterfahrzeug 18 untergebrachten Antriebsaggregaten verbunden sind.

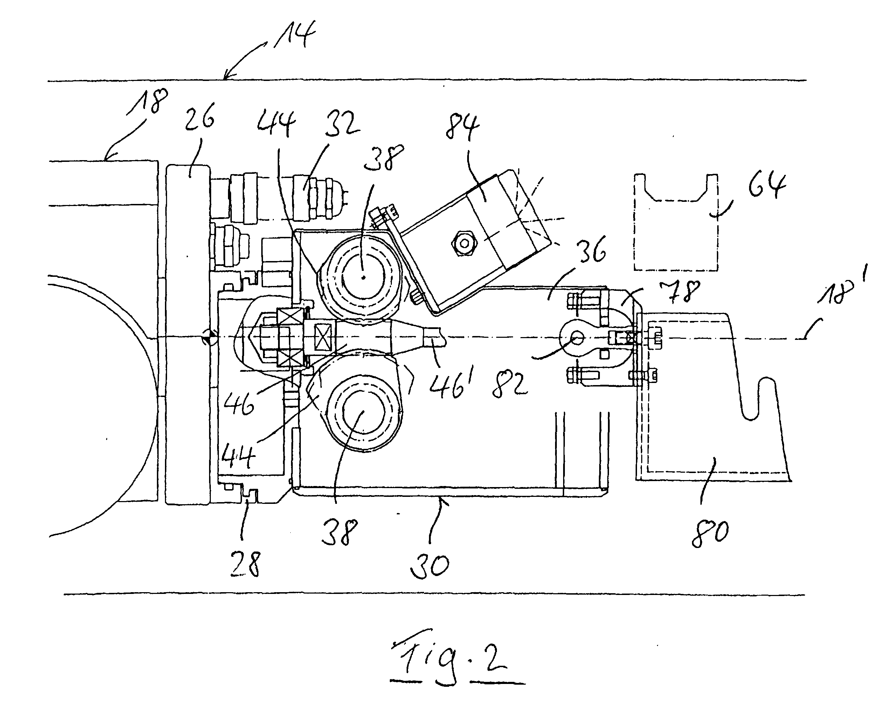

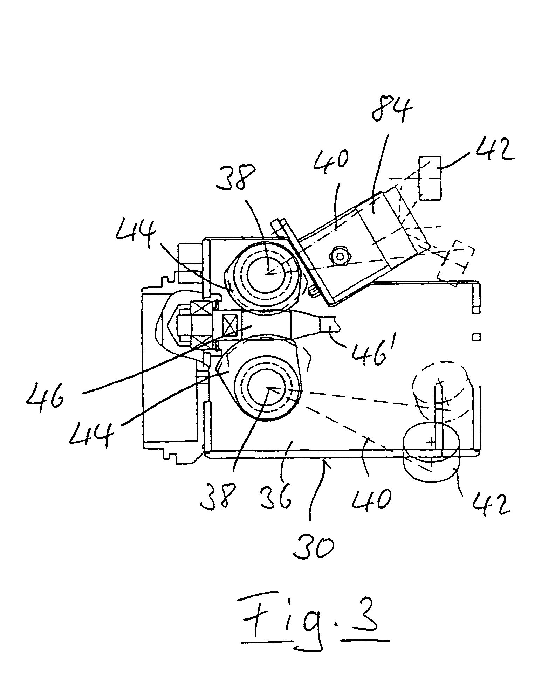

Der Bridensetzmodul 30 weist ein beispielsweise annähernd quaderförmiges Gehäuse 36 auf, an dem der diesem Bridensetzmodul 30 zugeordnete Teil des Bajonettverschlusses 28 befestigt ist. Am Gehäuse 36 sind zudem zwei parallele, rechtwinklig zur Längsachse 18' verlaufende Stützwellen 38 drehbar gelagert, die an ihren beiderseits über das Gehäuse 36 vorstehenden Enden Stützhebel 40 tragen, an deren Enden jeweils ein Stützelement, nämlich jeweils eine Stützrolle 42 frei drehbar gelagert ist. Innerhalb des Gehäuses 36 sitzt auf jeder Stützwelle 38 drehfest jeweils ein Schneckenradsegment 44 (vgl. insbesondere Figuren 2 und 3). Die beiden Schneckenradsegmente 44 kämmen mit einer Schnecke 46, die an einer in Richtung der Längsachse 18' verlaufenden, am Gehäuse 36 frei drehbar gelagerten Schneckenwelle 46' ausgebildet ist.

Auf dem von den Schneckenradsegmenten 44 (vgl. Figur 2) abgewandten freien Ende der Schneckenwelle 46' sitzt ein Zahnrad 50, das mit einem Antriebsrad 50' kämmt, das auf einer Ankoppelwelle 52 sitzt, die in einem seitlich über das Gehäuse 36 vorstehenden Bereich eines fest mit dem Gehäuse 36 verbundenen Getriebegehäuseteils 48' frei drehbar gelagert ist (vgl. insbesondere Figur 4). Die Ankoppelwelle 52 ist über eine strichpunktiert angedeutete Verbindungswelle 54' mit der entsprechenden, am Drehteller 26 gelagerten Abgangswelle 34' verbunden. Mit einem Antrieb dieser Abgangswelle 34' mittels des entsprechenden, im Kanalroboterfahrzeug 18 angeordneten Antriebsaggregats können die Stützhebel 40 aus einer in der Figur 3 mit strichpunktierten Linien gezeigten Ruhestellung, in der sie etwa in Richtung der Längsachse 18' (vgl. z.B. Figur 1) verlaufen, in eine in der Figur 3 mit ausgezogenen Linien dargestellte Stützstellung verschwenkt werden, in der die Stützrollen 42 sich an der Rohrinnenwand 14' abstützen. Dadurch wird eine Zentrierung der Längsachse 18' bezüglich des Rohres 14 erreicht.

Wie beispielsweise der Figur 3 entnommen werden kann, verlaufen bei ihre Stützstellung einnehmenden Stützhebeln 40 die Achsen der oben liegenden Stützrollen 42 zumindest annähernd parallel zur Längsachse 18' und die Achsen der unten liegenden Stützrollen 42 rechtwinklig zur Längsachse 18'. Dadurch wird eine Beschädigung der Rohrinnenwand 14' vermieden und gleichzeitig die Motagevorrichtung 10 bezüglich des Rohres 14 blokkiert. Eine solche Lagerung der Stützrollen 42 ermöglicht bei geringfügigem Zurückschwenken der Stützhebel 40 aus der Stützstellung eine axiale Justierung der Lage der Montagevorrichtung 10 durch einen entsprechenden Antrieb des Kanalroboterfahrzeugs 18.

Im Bridensetzmodul 30 ist radial, d.h. senkrecht zur Längsachse 18' verschiebbar ein Bridensetzkopf 64 gelagert, der an seinem äusseren freien Ende mit insbesondere pneumatisch betätigbaren Haltebacken 56 versehen ist, die mit dem Verschlussteil 58 einer jeweiligen Bride 12 in Eingriff bringbar sind (vgl. insbesondere die Figuren 1, 6, 7 und 8). Dabei können die Haltebacken 56 mit Stiften versehen sein, um einen möglichst zuverlässigen Eingriff mit dem jeweiligen Verschlussteil 58 sicherzustellen.

Der als Schlitten ausgebildete, an einer gehäusefesten Führungsschiene 60 angeordnete und mit einer Zahnstange 62 verbundene Bridensetzkopf 64 wird über ein mit der Zahnstange 62 kämmendes Zahnrad 66 entsprechend in Radialrichtung bewegt. Das Zahnrad 66 ist über eine weitere Verbindungswelle 54 mit einer weiteren Abtriebswelle 34 gekoppelt, die wieder mit einem betreffenden, im Kanalroboterfahrzeug 18 untergebrachten Antriebsaggregat verbunden ist (vgl. insbesondere die Figuren 4 bis 6).

Die Abgangswelle 34 ist ebenso wie die Abgangswelle 34' drehbar am Drehteller 26 des Kanalroboterfahrzeugs 18 gelagert und mit einem im Kanalroboterfahrzeug 18 untergebrachten Antriebsaggregat gekoppelt. Während die Abgangswelle 34' der Zentrierung dient, wird über die Abgangswelle 34 der Bridensetzkopf in Radialrichtung verstellt. Die beiden Abgangswelle 34 und 34' können insbesondere geregelt angetrieben sein.

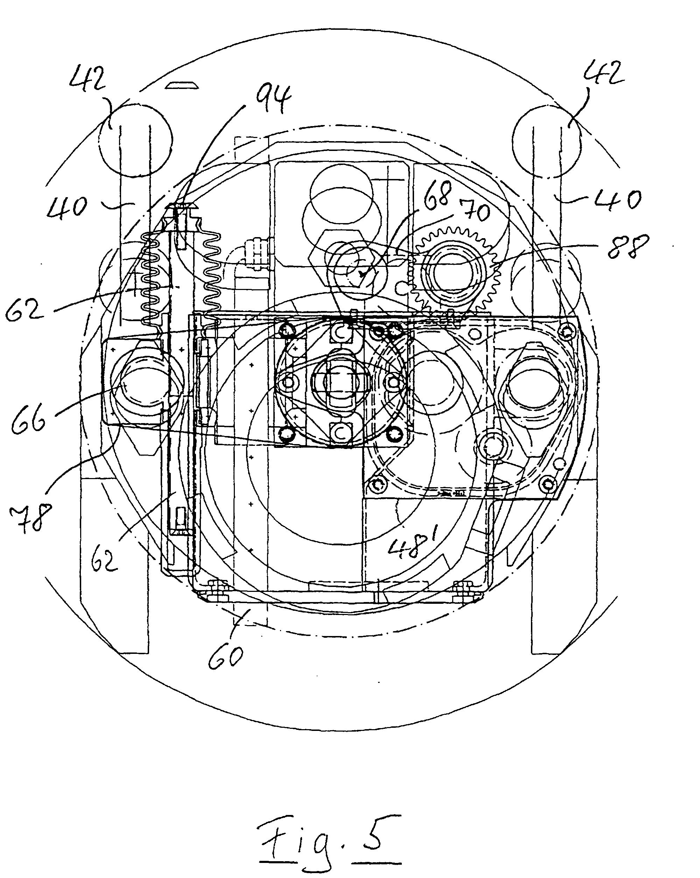

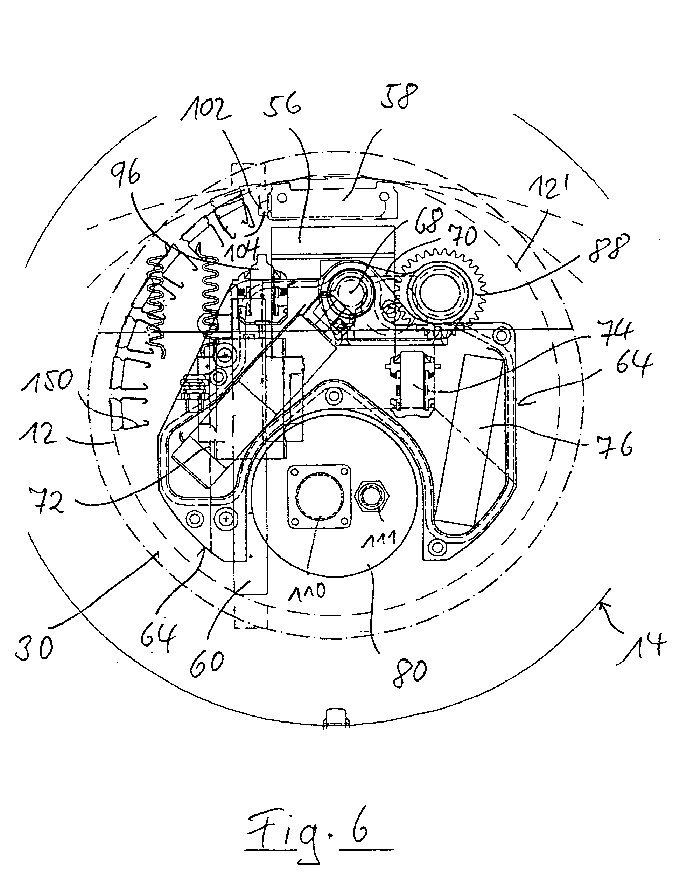

Im oder am Bridensetzkopf 64 ist ferner ein zum Aufweiten mit einem weiteren, d.h. vom Verschlussteil 58 verschiedenen Abschnitt der Bride 12 in Eingriff bringbares Ritzel 88 um eine Achse 68 schwenkbar gelagert. Dabei ist ein um die Achse 68 schwenkbarer Hebel 70 vorgesehen, an dessen freiem Ende das Ritzel 88 drehbar gelagert ist. Die Schwenkachse 68 erstreckt sich parallel zur Längsachse 18' des Kanalroboterfahrzeugs 18, so dass das Ritzel 68 in einer zu dieser Längsachse 18' senkrechten Ebene verschwenkbar ist (vgl. insbesondere die Figuren 5 und 6). Das Ritzel 88 wird durch einen Elektromotor 72 angetrieben. Beim vorliegenden Ausführungsbeispiel ist auch dieser Elektromotor 72 im Bridensetzkopf 64 untergebracht (vgl. insbesondere Figur 6). Der Schwenkhebel 70 wird durch eine Zylinder/Kolben-Einheit 74 verschwenkt. Wie der Figur 6 entnommen werden kann, ist auch diese Zylinder/Kolben-Einheit 74 im oder am Bridensetzkopf 64 angeordnet.

Eine jeweilige Bride 12 kann demzufolge durch ein radiales Ausfahren des Bridensetzkopfes 58 und ein Ausschwenken des Ritzels 78 sowie ein Antreiben dieses Ritzels 88 aufgeweitet und an die Innenwand 14' des nicht begehbaren Rohres 14 angelegt werden. Zudem kann in dem Bridensetzkopf 64 auch zumindest ein Teil der für die Antriebe erforderlichen Elektronik 76 angeordnet sein.

Während die der Zentrierung dienenden Antriebsmittel 50, 50' in einem fest mit dem Gehäuse 36 des Bridensetzmoduls 30 verbundenen Getriebegehäuseteil 48' untergebracht sind, sind die dem Bridensetzkopf 64 zugeordneten Antriebsmittel 62, 66 in einem Getriebegehäuseteil 48" angeordnet, der fest mit einem Support 78 verbunden ist, der selbst fest mit einem dem Ankoppeln des Bridenwagens 11 dienenden Kupplungsrohr 80 verbunden ist (vgl. insbesondere auch Figur 2). Das Kupplungsrohr 80 sowie der fest mit diesem verbundene Support 78 sind über ein Gelenk 82 mit dem Bridensetzmodul 30 verbunden. Dabei sind der Support 78 und das Kupplungsrohr 80 gemeinsam in sämtlichen Richtungen um einige Grad wie beispielsweise um etwa ± 3° bezüglich des Gehäuses 36 des Bridensetzmoduls 30 schwenkbar.

Am Gehäuse 36 des Bridensetzmoduls 30 ist ferner eine TV-Kamera 84 vorgesehen, die der Überwachung des Bridensetzvorgangs dient. Diese Kamera 84 kann beispielsweise schwenkbar am Gehäuses 36 des Bridensetzmoduls 30 gelagert sein.

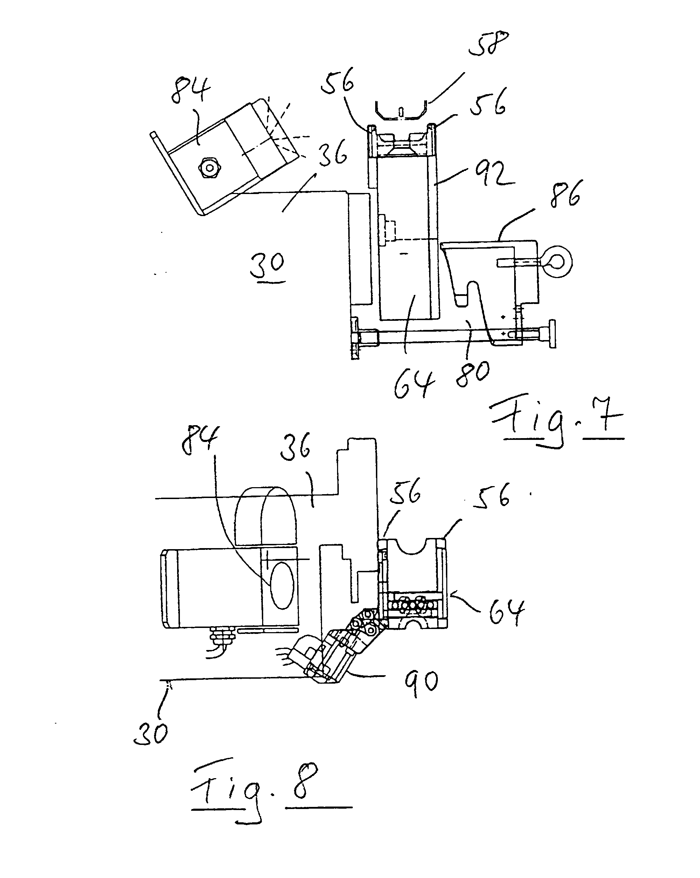

Wie bereits angedeutet kann das Bridensetzmodul 30 zumindest einen Teil der erforderlichen Elektronik und/oder Pneumatik enthalten. Die Zentrierung sowie das Anheben und Absenken des Bridensetzkopfes 64 kann insbesondere über Gelenkwellen erfolgen. Zur Anpassung an unterschiedliche Rohrinnendurchmesser kann die TV-Kamera 84 über entsprechende Adapter angebracht werden. Je nach Rohrinnendurchmesser können unterschiedliche Stützhebel 40 verwendet werden. Gegebenenfalls sind auch entsprechende Zentrieradapter einsetzbar. Um den Bridensetzkopf 64 zum Setzen von einzelnen Briden 12 (ohne Bridenwagen 11) bezüglich des Gehäuses 36 des Bridensetzmoduls 30 zu fixieren, kann z.B. ein Kupplungsadapter 86 auf das Kupplungsrohr 80 aufgesetzt werden (vgl. insbesondere Figur 7).

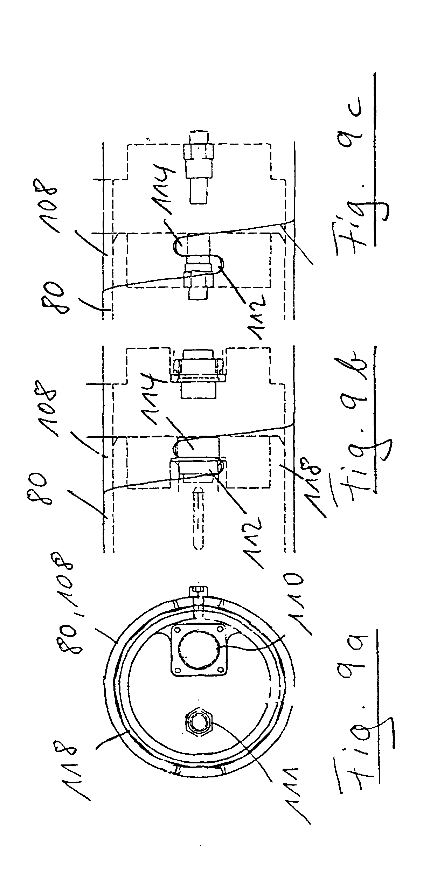

Den Figuren 7 und 8 kann auch nochmals entnommen werden, dass die beiden zweckmässigerweise mit Stiften versehenen Haltebacken 56 des Bridensetzkopfes 64 zum Halten eines betreffenden Verschlussteils 58 aufeinander zu und voneinander weg bewegbar sind. Gemäss Figur 8 kann hierzu eine am Gehäuse 36 des Bridensetzmoduls 30 angeordnete Zylinder/Kolben-Einheit 90 vorgesehen sein. In den Figuren 7 und 8 ist auch wieder die am Gehäuse 36 fixierte TV-Kamera 84 zu erkennen. Erforderlichenfalls kann dem Bridensetzkopf 64 auch ein Hubadapter 92 zugeordnet sein, wie dies beispielsweise in Figur 7 angedeutet ist. Schliesslich kann gegebenenfalls auch ein Verschalungsadapter verwendet werden. Wie sich aus dem vorstehenden bereits ergibt, wird der Bridensetzmodul 30 vorzugsweise von aussen betätigt.

Auch in Figur 5 ist nochmals die fest mit dem Gehäuse 36 des Bridensetzmoduls 30 verbundene Abdeckung 48' für das der Zentrierung dienende Zahnradgetriebe sowie der fest mit dem Kupplungsrohr 80 verbundene Support 78 zu erkennen, an dem die Führungsschiene 60 befestigt und das mit der Zahnstange 62 kämmende Zahnrad 66 drehbar gelagert ist. Bei 94 ist die Befestigung des Bridensetzkopfes 64 an der Zahnstange 62 angedeutet. Durch einen entsprechenden Antrieb ist der Bridensetzkopf 64 dann entlang der Führungsschiene 60 verfahrbar. In der Figur 6 ist zudem die dem Bridenwagen 11 zugewandte Stirnseite des dem Bridensetzmodul 30 zugeordneten Kupplungsrohres 80 zu erkennen.

Wie sich am besten aus der Figur 6 ergibt, ist am Bridensetzkopf 64 eine weitere Zylinder/Kolben-Einheit 96 angeordnet, auf dessen Kolbenstange eine Schlagmasse sitzen kann. Diese Zylinder/Kolben-Einheit 96 dient dazu, den als Spannverschluss vorgesehenen Verschlussteil 58 der betreffenden Bride 12 nach einem Aufweiten und Anlegen der Bride 12 an die Rohrinnenwand 14' auszulösen, um dadurch zu bewirken, dass das Bridenband 12 durch eine freigegebene Federkraft unter Druckspannung gesetzt und entsprechend gegen die Rohrinnenwand 18' gepresst wird, so dass es insbesondere auch bei stärker strömenden Medien im Rohr seine Position beibehält.

Hierzu kann der Verschlussteil 58 auf unterschiedliche Weise ausgebildet sein. So kann in dem als Spannverschluss ausgebildeten Verschlussteil 58 beispielsweise ein durch die Zylinder/Kolben-Einheit 96 beaufschlagbarer federbelasteter Rastbalken 102 vorgesehen sein, der beispielsweise von zwei Schraubenfedern (nicht gezeigt) flankiert ist. Die der Zylinder/Kolben-Einheit 96 benachbarte Stirnwand des Gehäuses des Verschlussteils 58 kann z.B. einen Rasteinschnitt aufweisen, durch den zum Spannen des Verschlussteils 58 eine Nase 104 des Rastbalkens 102 hindurchgeführt wird (vgl. insbesondere Figur 6). Mit dem Verschlussteil 58 kann ein radial äusserer Abschnitt des zunächst z.B. spiralförig aufgewickelten Bridenbandes 12 fest verbunden sein. Bei noch gespanntem Verschlussteil 58 kann dann ein radial innerhalb des äusseren Bridenbandabschnitts liegender innerer Bridenbandabschnitt beispielsweise aufgrund eines Freilaufs in der gewünschten Richtung frei durch den Verschlussteil 58 hindurchgeführt werden. Die Verriegelung kann schliesslich dadurch gelöst werden, dass die Nase 104 des Rastbalkens 102 von der Zylinder/Kolben-Einheit 96 entsprechend beaufschlagt wird. Sobald der Verschlussteil 58 über die Zylinder/Kolben-Einheit 96 gelöst wird, wird über den nunmehr freigegebenen Rastbalken 102 und beispielsweise ein dem Freilauf zugeordnetes Blockierelement der radial innere Bridenbandabschnitt entsprechend der auf den Rastbalken 102 wirkenden Federkraft unter Druckspannung gesetzt und entsprechend gegen die Rohrinnenwand 14' gespresst, wodurch ein zuverlässiger Sitz gewährleistet ist. Der Verschlussteil 58 wird in der Regel erst dann gelöst, wenn das zunächst insbesondere spiralförmig aufgewickelte Bridenband hinreichend aufgeweitet ist und zumindest im wesentlichen bereits an der Rohrinnenwand 14' anliegt.

Die Spurweite des Kanalroboterfahrzeugs 18 ist zur Anpassung an den jeweiligen Rohrinnendurchmesser einstellbar.

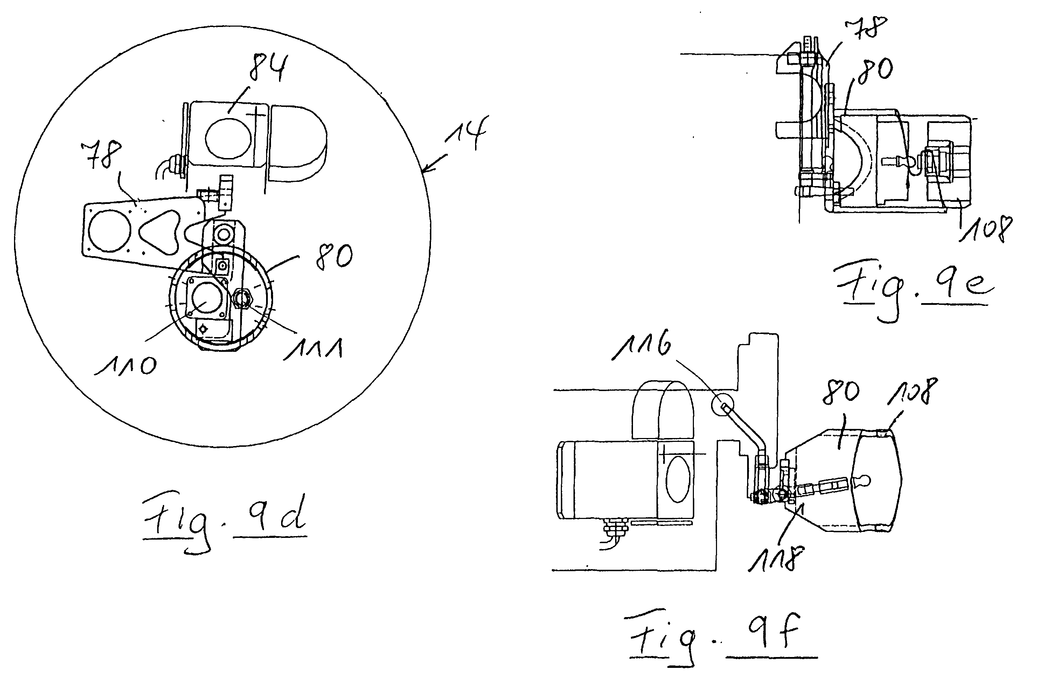

Die Montagevorrichtung 10 ist mit dem mit einem jeweiligen Bridenmagazin 106 bestückbaren Bridenwagen 11 koppelbar (vgl. insbesondere die Figuren 1 und 9 bis 16). Dazu wirkt das am Bridensetzmodul 30 vorgesehene Kupplungsrohr 80 in der beispielsweise aus den Figuren 1, 2, 4, 9 und 11 ersichtlichen Weise mit einem am Bridenwagen 11 vorgesehenen komplementären Kupplungsrohr 108 zusammen. Dabei ist die Montagevorrichtung 10 in der beispielsweise aus der Figur 1 ersichtlichen Weise derart mit dem Bridenwagen 11 koppelbar, dass dieser für einen jeweiligen Magazinzwechsel relativ zur Montagevorrichtung 10 um etwa 90° in eine im wesentlichen aufrechte Stellung hochschwenkbar ist. Dazu können überdies Mittel für ein automatisches Trennen und ein automatisches Wiederherstellen der jeweiligen elektrischen und pneumatischen Verbindungen zwischen der Montagevorrichtung 10 und dem Bridenwagen 11 vorgesehen sein. Wie insbesondere den Figuren 9a und 9d entnommen werden kann, sind die beiden Kupplungsrohre 80 und 108 jeweils mit zusammenwirkenden Teilen einer Pneumatiksteckerkupplung 111 und einer elektrischen Steckerkupplung 110 versehen. In den Figuren 9d und 9e ist zudem nochmals der fest mit dem Kupplungsrohr 80 verbundene Support 78 zu erkennen.

Das am Bridenwagen 11 vorgesehene Kupplungsrohr 108 besitzt ein nach unten gerichtetes hakenförmiges Teil 112, das mit einem komplementären hakenförmigen Teil 114 des Kupplungsrohres 80 am Bridensetzmodul 30 der Montagevorrichtung 10 in Eingriff kommt. Wie am besten anhand der Figur 9 zu erkennen ist, ist eine über einen Betätigungshebel 116 hin- und herschiebbare Schiebekupplung 118 vorgesehen. Indem diese Schiebekupplung 118 auf dem Bridenwagen 11 in eine Koppelstellung ausgefahren wird, werden einerseits die beiden Kupplungsrohre 80, 108 fest miteinander verbunden und andererseits die elektrischen und pneumatischen Verbindungen hergestellt. Generell kann vor dem Ankuppeln des Bridenwagens 11 der Bridensetzkopf 64 mit einer einzelnen Bride 12 bestückt werden, wie dies beispielsweise in Figur 1 gezeigt ist. In Figur 9b ist die Schiebekupplung 118 in ihrer Entkoppelstellung dargestellt. Ausgehend von dieser Entkoppelstellung kann sie nach rechts in ihre Koppelstellung verschoben werden, wodurch, wie bereits erwähnt, die pneumatischen und elektrischen Verbindungen automatisch hergestellt und die beiden Kupplungsrohre 80, 108 mechanisch miteinander verriegelt werden, wodurch ein Trennen dieser Kupplungsrohre verhindert wird.

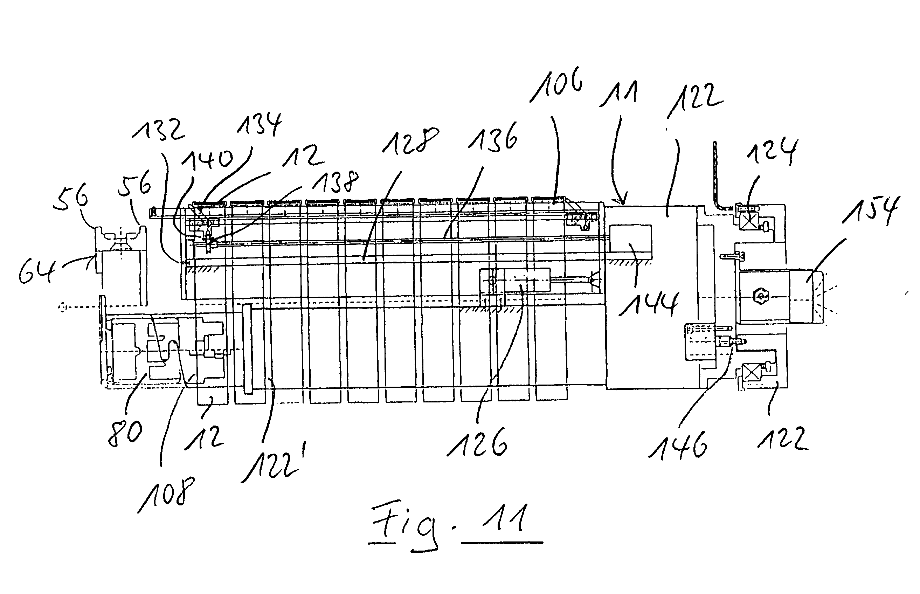

Wie insbesondere den Figuren 1 und 11 entnommen werden kann, umfasst der Bridenwagen 11 ein mit wenigstens einem Rad 158 versehenes Fahrgestell 120 sowie ein mit dem Kupplungsrohr 108 versehenes Basisteil 122, das relativ zu dem Fahrgestell 120 um eine sich in Längsrichtung erstreckende Achse drehbar ist, die insbesondere mit der Längsachse 18' zusammenfallen kann. Demzufolge kann das Basisteil 122 zusammen mit dem Bridensetzmodul 30 über den Drehteller 26 des Kanalroboterfahrzeugs 18 gedreht werden. Wie insbesondere der Figur 11 zu entnehmen ist, ist zwischen dem drehbaren Basisteil 122 und dem Fahrgestell 120 des Bridenwagens 11 ein Kugellager 124 vorgesehen. Zum Verfahren ist das Basisteil 122 mit dem Fahrgestell 120 mittels einer Verriegelung 146 drehfest verriegelbar.

Wie insbesondere den Figuren 1 und 11 entnommen werden kann, dient das Basisteil 122 des Bridenwagens 11 der Aufnahme eines jeweiligen Bridenmagazins 106, wobei das jeweilige Bridenmagazin 106 entlang diesem Basisteil 122 verschiebbar ist.

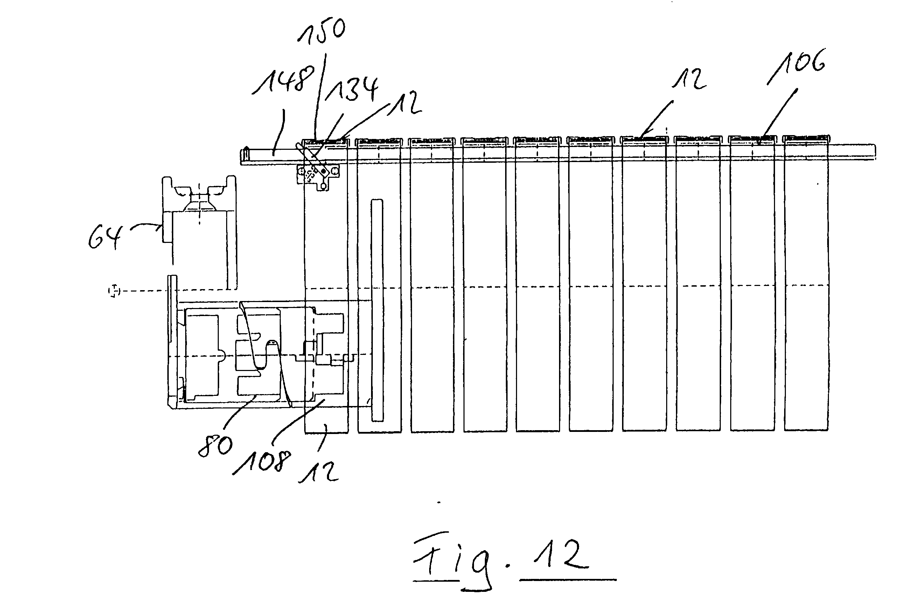

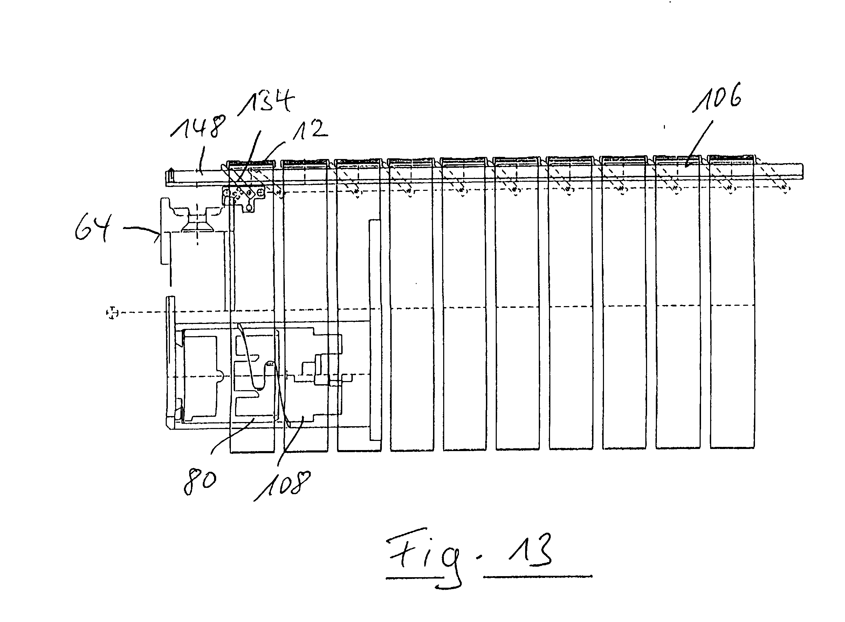

Das Kupplungsrohr 108 ist an einem unteren Trägerteil 122' des Basisteils 122 vorgesehen. Eine am Basisteil 122 bzw. dessen unterem Trägerteil 122' abgestützte Zylinder/Kolben-Einheit 126 dient dazu, das jeweilige Bridenmagazin 106 relativ zum Basisteil 122 in dessen Längsrichtung zwischen einer Ruhestellung (vgl. insbesondere die Figuren 11 und 12) und einer Übergabestellung (vgl. insbesondere die Figuren 13 bis 15) zu bewegen, in der die dem Bridensetzkopf 30 jeweils am nächsten gelegene vorderste Bride 12 an den Bridensetzkopf 64 übergebbar ist.

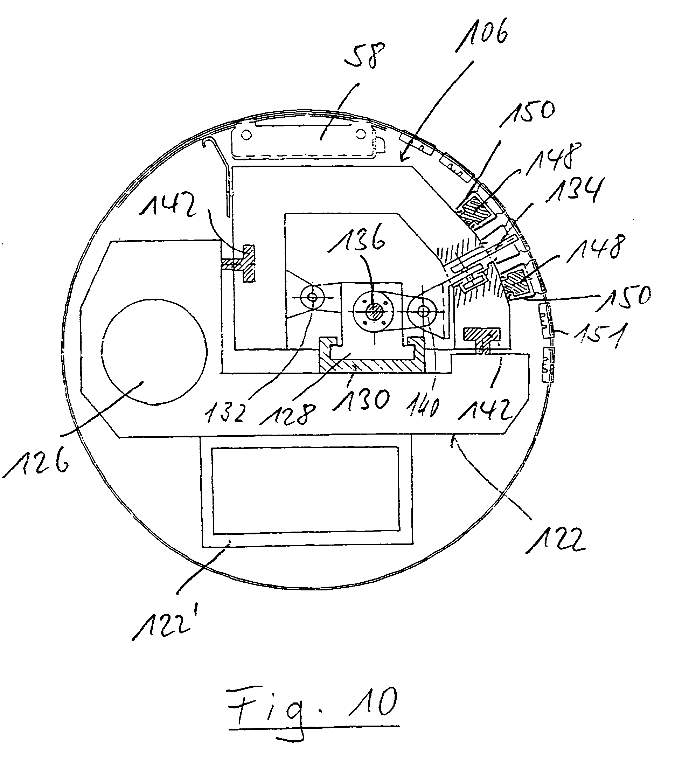

Dabei ist das entlang dem Basisteil 122 verschiebbare Bridenmagazin 106 mit einem am Basisteil 122 geführten, von der Zylinder/Kolben-Einheit 126 beaufschlagbaren Schlitten 128 koppelbar (vgl. insbesondere die Figuren 10 und 11). Wie am besten der Figur 10 entnommen werden kann, ist dieser Schlitten 128 in einer C-Schiene 130 geführt, die fest am Basisteil 122 angeordnet ist. Dabei ist das Bridenmagazin 106 über wenigstens eine Rastkupplung 132 (vgl. Figuren 10 und 11) mit dem Schlitten 128 koppelbar.

Wenigstens ein am Bridenmagazin 106 in dessen Längsrichtung verschiebbar geführtes Förderorgan 134 dient dazu, die dem Bridensetzkopf 64 jeweils am nächsten gelegene vorderste Bride 12 zur Übergabe zu vereinzeln und über den Bridensetzkopf 64 zu schieben.

Für den Antrieb des Förderorgans 134 ist eine bezüglich des Schlittens 128 drehbare, in Längsrichtung jedoch nicht verschiebbare Spindel 136 und eine auf der Spindel 136 sitzende, mit dem Förderorgan 134 koppelbare Laufmutter 138 vorgesehen (vgl. insbesondere die Figuren 10 und 11). Die Laufmutter 188 ist über eine Rastkupplung 140 mit dem Förderorgan 1 34 koppelbar.

Wie insbesondere der Figur 10 entnommen werden kann, sind am Basisteil 122 des Bridenwagens 11 Führungsschienen 142 vorgesehen, an denen das Bridenmagazin 106 geführt ist.

Gemäss Figur 11 wird die Spindel 136 von einem Elektromotor 144 angetrieben, der im Basisteil 122 des Bridenwagens 11 angeordnet ist. Anhand der Figur 11 ist auch die Verriegelung 146 erkennbar, über die das Basisteil 122 zum Verfahren mit dem Fahrgestell 120 drehfest verriegelbar ist.

Wie insbesondere anhand der Figuren 10 und 12 zu erkennen ist, sind die Briden 12 entlang zweier am Bridenmagazin 106 vorgesehener Aufnahmeschienen 148 relativ zum Bridenmagazin 106 verschiebbar. Auf diese Schienen 148 sind jeweils zwei Klammern 150 einer jeweiligen Bride 12 aufgeschnappt (vgl. insbesondere die Figuren 10 und 12). Im vorliegenden Fall ist jede Bride 12 mit insgesamt sieben solchen Klammern 150 versehen (vgl. insbesondere die Figur 6). Wie Fig. 10 zeigt, kann beispielsweise die Bride 12 auch mit drei Klammern 150 und beidseits dieser Klammergruppe mit beispielsweise zwei Sockeln 151 versehen sein, auf welche nachträglich weitere Klammern montierbar sind.

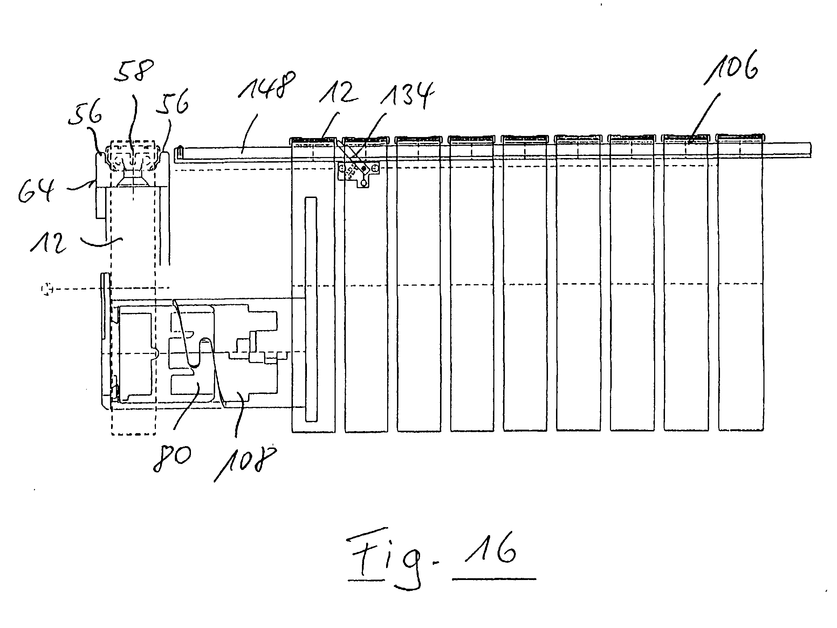

In Umfangsrichtung des Rohres 14 betrachtet sind der Verschlussteil 58 einerseits und die Klammern 150 einer jeweiligen Bride 12 andererseits gegeneinander versetzt. Sobald eine jeweilige Bride 12 über den Bridensetzkopf 64 geschoben ist, wird dieser mit dem Verschlussteil 58 dieser Bride 12 in Eingriff gebracht, wozu dessen insbesondere mit Stiften versehene Haltebacken 56 entsprechend zusammengeführt werden (vgl. insbesondere die Figur 16).

Ebenso wie das Kanalroboterfahrzeug 18 ist auch der Bridenwagen 11 bzw. dessen Fahrgestell 120 zur Anpassung an den jeweiligen Rohrinnendurchmesser in seiner Spurweite einstellbar.

Das Bridenmagazin 106 kann mit einer Verschalung 152 (vgl. Figur 1) versehen sein. Grundsätzlich ist auch eine Verschalung am Bridenwagen 11 denkbar. Überdies ist auch eine Verschalung mit Radsatz denkbar. Die Verschalungen können in Abhängigkeit vom jeweiligen Rohrinnendurchmesser unterschiedlich sein. So ist beispielsweise auch die Verwendung von Schalenadaptern denkbar.

Zudem können für unterschiedliche Briden 12 unterschiedliche Bridenmagazine 106 vorgesehen sein. Dabei enthält ein jeweiliges Magazin jeweils wenigstens zwei Briden. In der Praxis können pro Magazin beispielsweise zehn Briden vorgesehen sein. Im Bridenwagen 12 kann das jeweilige Magazin 106 arretierbar sein. Der Vorschub der Briden 12 sowie deren Vereinzelung kann beispielsweise in der zuvor beschriebenen Art und Weise erfolgen.

Der mit einer Magazinaufnahme und der Rohrkupplung 108 versehene Bridenwagen kann insbesondere mit den dem Vorschub und der Vereinzelung der Briden dienenden Antriebsmitteln versehen sein, wie dies zuvor im einzelnen beispielhaft erläutert wurde. Im Bridenwagen 11 können zudem die hierfür erforderlichen Elektronik- und Pneumatikkomponenten vorgesehen sein. An geeigneter Stelle wie insbesondere am Fahrgestell 122 kann beispielsweise eine der Bergung dienende Öse oder dergleichen vorgesehen sein.

Wie insbesondere anhand der Figur 1 zu erkennen ist, ist am Fahrgestell 122 des Bridenwagens 11 eine nach hinten gerichtete Kamera 154 vorgesehen.

Die Funktionsweise des zuvor beschriebenen Ausführungsbeispiels einer Montagevorrichtung 10 mit zugeordnetem Bridenwagen 11 beim Montieren von Innenbriden 12 ist wie folgt:

Je nach Platzverhältnissen wird das ferngesteuerte, selbstfahrende Kanalroboterfahrzeug 18 mit oder ohne aufgesetzten Bridensetzmodul 30 in einen Schacht hinuntergelassen. Dann wird das Kanalroboterfahrzeug 18 drehtellerseitig voraus durch das nicht begehbare Rohr 14, in das die Innenbriden 12 zu versetzen sind, zum nächsten Schacht verfahren. Dann wird der Bridensetzkopf 64 mit einer Bride 12 bestückt.

In diesen Schacht wird dann der Bridenwagen 11 hinuntergelassen und mit einem Bridenmagazin 106 bestückt. Dazu wird der Bridenwagen 11 in der in Figur 1 angedeuteten Weise aufgestellt und das Bridenmagazin 106 auf die Führungsschienen 148 am Basisteil 122 des Bridenwagens 11 aufgeschoben, bis die Rastkupplungen 140, 132 zwischen der Laufmutter 138 und dem Förderorgan 134 bzw. zwischen dem Schlitten 128 und dem Bridenmagazin 106 eingerastet sind. Daraufhin wird der Bridenwagen 11 abgelegt, wobei sein Kupplungsrohr 108 mit dem nach unten gerichteten hakenförmigen Teil 112 mit dem komplementären, nach oben gerichteten hakenförmigen Teil 114 des am Bridensetzmodul 30 vorgesehenen Kupplungsrohres 80 in Eingriff kommt. Anschliessend wird die Schiebekupplung 118 auf dem Bridenwagen 11 in die Koppelstellung ausgefahren, wodurch einerseits die beiden Kupplungsrohre 80, 108 fest miteinander verbunden und andererseits über die Steckerkupplungen 110, 111 die elektrischen und pneumatischen Verbindungen hergestellt werden. Wie bereits erwähnt kann vor dem Ankuppeln des Bridenwagens 11 der Bridensetzkopf 64 mit einer einzelnen Bride 12 bestückt werden, wie dies beispielsweise in Figur 1 dargestellt ist.

Die Montagevorrichtung 10 wird nun mit dem Kanalroboterfahrzeug 18 voraus an die Stelle im nicht begehbaren Rohr 14 gefahren, an der die erste Bride 12 zu setzen ist. Dazu wird mittels des Drehtellers 26 der Bridensetzmodul 30 und das drehbare Basisteil 122 des Bridenwagens 11 mit dem Bridenmagazin 106 in die gewünschte Drehlage gebracht. Zum Setzen der Bride 12 wird der Bridensetzkopf 64 in radialer Richtung ausgefahren und gleichzeitig mittels des Ritzels 88 die Bride aufgeweitet, bis diese an der Innenwand 14' des nicht begehbaren Rohres 14 anliegt.

Durch ein Entriegeln des Verschlussteils 58 der Bride 12 über die Kolben/Zylinder-Einheit 96 wird die Bride 12 unter Druckspannung gesetzt, so dass sie an der Rohrinnenwand 14' fixiert wird. Durch ein Auseinanderbewegen der Haltebacken 56 des Bridensetzkopfes 64 wird der Verschlussteil 58 freigegeben, woraufhin der Bridensetzkopf 64 in radialer Richtung wieder eingefahren wird.

Die zuvor genannten Vorgänge werden mittels der TV-Kamera 84 überwacht, bei der es sich insbesondere um eine TV-Farbkamera handeln kann. Dann wird durch Drehen des Drehtellers 26 der Bridensetzmodul 30 und das drehbare Basisteil 122 des Bridenwagens 11 in die Stellung verbracht, in der der Basisteil 122 mit dem Fahrgestell 120 des Bridenwagens 11 verriegelt werden kann.

Die Montagevorrichtung 10 wird nun zur nächsten Bridensetzstelle verfahren. Dort wird der Bridensetzkopf 64 mit einer Bride 12 aus dem Bridenmagazin 106 bestückt, wie dies beispielsweise in den Figuren 12 bis 16 dargestellt ist.

Figur 12 zeigt eine schematische Darstellung des seine Ruhestellung einnehmenden Bridenmagazins 106 bei über die Kupplungsrohre 108 und 80 mit dem Bridensetzmodul 30 gekoppeltem Bridenwagen 11. Das Förderorgan 134 hält die Briden 12 zurück.

Gemäss Figur 13 ist das Bridenmagazin 106 bereits in seine Übergabestellung verschoben. Das Förderorgan 134 wird nunmehr hinter die dem Bridensetzkopf 64 am nächsten gelegene vorderste Bride 12 des Bridenstapels bewegt.

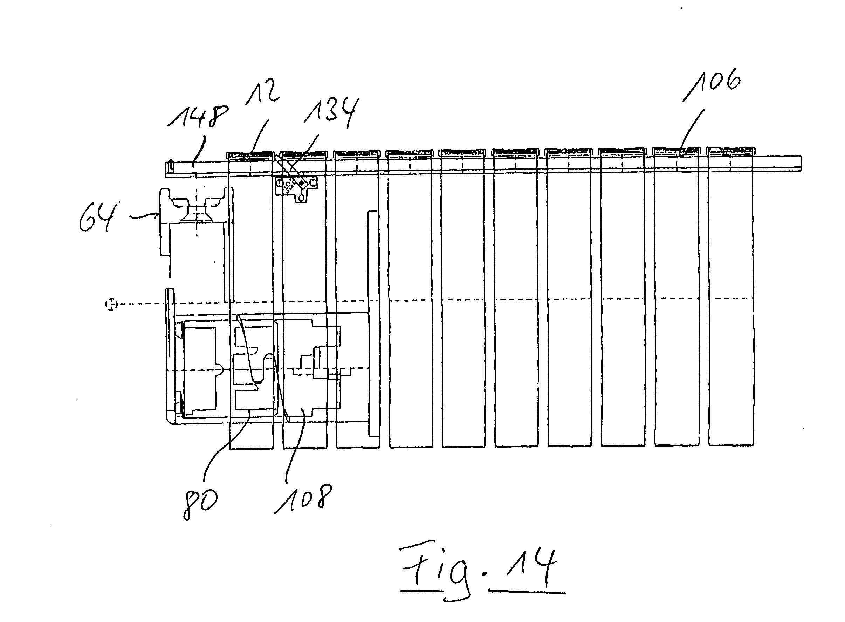

Figur 14 zeigt eine schematische Darstellung des seine Übergabestellung einnehmenden Bridenmagazins 106, wobei das Förderorgan 134 die vorderste Bride 12 des Bridenstapels bereits hintergreift.

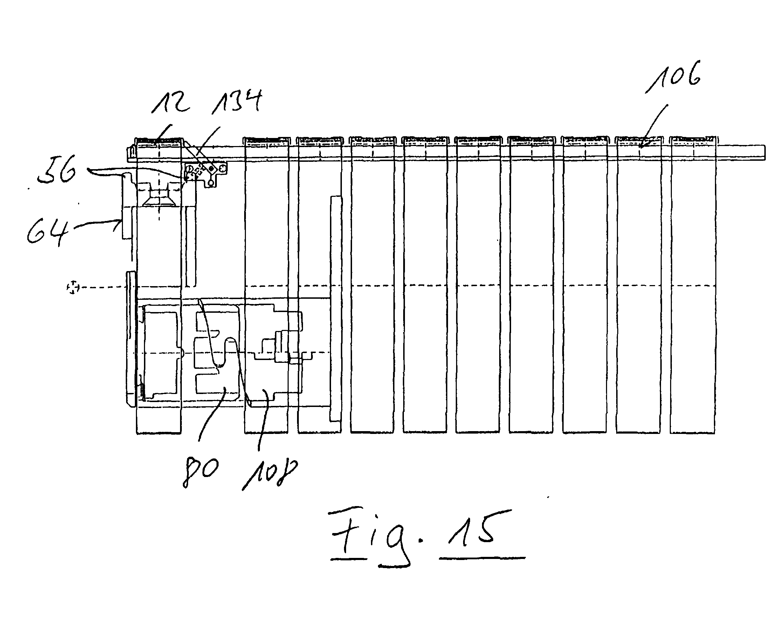

Figur 15 zeigt in schematischer Darstellung das seine Übergabestellung einnehmende Bridenmagazin 106 mit durch das Förderorgan 134 über den Bridensetzkopf 64 geschobener vorderster Bride 12. Diese vorderste Bride 12 wurde somit durch das Förderorgan 134 vereinzelt. Die Haltebacken 56 des Bridensetzkopfes 64 sind noch entsprechend der maximalen Distanz voneinander entfernt. Der Bridensetzkopf 64 wird in radialer Richtung in eine Übernahmestellung ausgefahren, um dann durch ein Aufeinanderzubewegen der Haltebacken 56 die Bride 12 am Verschlussteil 58 (vgl. auch Figur 16) zu erfassen.

Figur 16 zeigt nun in schematischer Darstellung das wieder in seine Ruhestellung zurückbewegte Bridenmagazin 106, wobei der Bridensetzkopf 64 den Verschlussteil 58 der zuvor übergebenen Bride 12 bereits erfasst hat und das Förderorgan 134 bereits wieder die vorderste Bride 12 des verbleibenden Bridenstapels hintergreift.

Nach dem Entriegeln des drehbaren Basisteils 122 wird der Bridensetzkopf 64 zusammen mit dem Bridenmagazin 106 zum Setzen der Bride 12 über den Drehteller 26 in die gewünschte Drehlage verbracht.

Dieser Vorgang wiederholt sich, bis das Bridenmagazin 106 leer ist. Anschliessend wird die Montagevorrichtung 10 mit zugeordnetem Bridenwagen 11 voraus zum Schacht zurückverfahren. Dazu dient die am Fahrgestell 120 vorgesehene weitere TV-Kamera 154.

Im Schacht wird die Schiebekupplung 118 in die Entkoppelstellung zurückgezogen, wodurch die elektrischen und pneumatischen Verbindungen automatisch getrennt werden, so daß der Bridenwagen 11 wieder aufgestellt werden kann. Die Rastkupplungen 132, 140 sind nun zugänglich und können von Hand gelöst werden. Das leere Magazin 106 wird vom Bridenwagen 11 abgezogen, und ein neues, die gewünschte Anzahl von Briden 12 aufweisendes aufgefülltes volles Bridenmagazin 106 wird auf das Basisteil 122 des Bridenwagens 11 aufgesetzt. Daraufhin kann der weiter oben beschriebene Vorgang wiederholt werden.

Selbstverständlich können Teile oder Baugruppen der Vorrichtung bei Beibehaltung ihrer Funktion unterschiedlich ausgebildet sein. So kann beispielsweise der Spindeltrieb für den Antrieb des Förderorgans 134 als Kettentrieb ausgebildet sein.

## Patentansprüche

1. Vorrichtung (10) zum Montieren einer Innenbride (12) in einem nicht begehbaren Rohr (14), mit einem an der Rohrinnenwand (14') in Rohrlängsrichtung (R) beweglich abstützbaren Gestell (16), einem am Gestell (16) bezüglich dessen Längsrichtung (18') radial bewegbar angeordneten, mit einem Abschnitt (58) der Innenbride (12) in Eingriff bringbaren Bridensetzkopf (64) sowie einem, mit einem weiteren Abschnitt (12') der Innenbride (12) in Eingriff bringbaren Ritzel (88) zum Aufweiten der Innenbride(12), und jeweiligen Antriebsmitteln (66, 72, 74), durch die zum Montieren der Innenbride (12) durch Aufweiten der Bridensetzkopf (64) radial nach außen bewegbar und das Ritzel (88) in Drehung versetzbar ist.

2. Vorrichtung nach Anspruch 1, dadurch gekennzeichnet, dass das Ritzel (88) vorzugsweise in einer rechtwinklig zur Längsrichtung (18') des Gestells (16) verlaufenden Ebene, bezüglich des Bridensetzkopfes (64) mittels Antriebsmitteln (74) aus- und einschwenkbar ist.

3. Vorrichtung nach Anspruch 1, gekennzeichnet durch Stützelemente (40,42), die von einer Ruhestellung in eine Stützstellung bewegbar sind , in der sie an der Rohrinnenwand (14') anliegen und die Längsachse (18') der Vorrichtung (16) wenigstens annähernd in der Mittelachse des Rohres (14) halten.

4. Vorrichtung nach einem der vorhergehenden Ansprüche, dadurch gekennzeichnet, dass das Gestell (16) ein selbstfahrendes Kanalroboterfahrzeug (18) umfaßt, das mit einer Dreheinrichtung (26) zum Drehen des Bridensetzkopfes (64) um die Längsachse (18') versehen ist.

5. Vorrichtung nach einem der vorhergehenden Ansprüche, dadurch gekennzeichnet, dass der radial bewegbare Bridensetzkopf (64) in oder an einem vorzugsweise an die Dreheinrichtung (26) des Kanalroboterfahrzeuges (18) ansetzbaren Bridensetzmodul (30) gelagert ist.

6. Vorrichtung nach Anspruch 5, dadurch gekennzeichnet, dass die Stützelemente (40,42) am Bridensetzmodul (30) angeordnet sind.

7. Vorrichtung nach Anspruch 5 oder 6, dadurch gekennzeichnet, dass zumindest ein Teil der jeweiligen Antriebsmittel (66, 66; 72, 74; 50, 50') für den radial bewegbaren Bridensetzkopf (64), das verschwenkbare Ritzel (88) und/oder die Stützelemente (40,42) in oder an dem Bridensetzmodul (30) vorgesehen ist.

8. Vorrichtung nach Anspruch 7, dadurch gekennzeichnet, dass das Ritzel (88) in oder an dem Bridensetzkopf (64) schwenkbar gelagert ist.

9. Vorrichtung nach Anspruch 7 und 8, dadurch gekennzeichnet, dass das verschwenkbare Ritzel (88) über eine in oder an dem Bridensetzkopf (64) angeordnete Zylinder/Kolben-Einheit (74) aus- und einschwenkbar und durch einen in oder an dem Bridensetzkopf (64) angeordneten Motor (72) in Drehung versetzbar ist.

10. Vorrichtung nach einem der vorhergehenden Ansprüche, dadurch gekennzeichnet, dass sie mit einem mit einem jeweiligen Bridenmagazin (106) bestückbaren Bridenwagen (11) koppelbar ist.

11. Vorrichtung nach Anspruch 10, dadurch gekennzeichnet, dass der ihr zugeordnete, mit einem komplementären Kupplungsteil (108) des Bridenwagens (11) zusammenwirkende Kupplungsteil (80) am Bridensetzmodul (30) angeordnet ist.

12. Vorrichtung nach Anspruch 10 oder 11, dadurch gekennzeichnet, dass sie derart mit dem Bridenwagen (11) koppelbar ist, daß dieser für einen jeweiligen Magazinwechsel relativ zu ihr um etwa 90 ° in eine im wesentlichen aufrechte Stellung schwenkbar ist.

13. Vorrichtung nach einem der Ansprüche 10 bis 12, dadurch gekennzeichnet, dass Mittel (110, 111) für ein automatisches Trennen und ein automatisches Wiederherstellen jeweiliger elektrischer und pneumatischer Verbindungen zum Bridenwagen (11) vorgesehen sind.

14. Bridenwagen (11), dadurch gekennzeichnet, dass er mit einer Vorrichtung zum Montieren einer Innenbride (12) in einem nicht begehbaren Rohr (14) nach einem der Ansprüche 1 bis 13 gekoppelt ist.

15. Bridenwagen nach Anspruch 14, dadurch gekennzeichnet, dass er mit einem jeweiligen auswechselbaren Bridenmagazin (106) bestückbar ist.

16. Bridenwagen nach Anspruch 15, dadurch gekennzeichnet, dass er ein der Aufnahme eines jeweiligen Bridenmagazins (106) dienendes Basisteil (122) umfaßt, entlang dem das Bridenmagazin (106) verschiebbar ist.

17. Bridenwagen nach Anspruch 15 oder 16, dadurch gekennzeichnet, dass Mittel (126) vorgesehen sind, um das betreffende Bridenmagazin (106) relativ zum Basisteil (122) in dessen Längsrichtung zwischen einer Ruhestellung und einer übergabestellung zu bewegen, in der die dem Setzkopf (30) jeweils am nächsten gelegene vorderste Bride (12) an den Setzkopf (64) übergebbar ist.

18. Bridenwagen nach Anspruch 17, dadurch gekennzeichnet, dass Mittel (134) vorgesehen sind, um die dem Setzkopf (64) jeweils am nächsten gelegene vorderste Bride (12) zu Übergabe zu vereinzeln und über den Setzkopf (64) zu schieben.

19. Bridenwagen nach einem der Ansprüche 15 bis 18, dadurch gekennzeichnet, dass das die Briden (12) in Längsrichtung des Bridenmagazins (106) relativ zu diesem verschiebbar sind.

20. Bridenwagen nach einem der Ansprüche 15 bis 19, dadurch gekennzeichnet, dass das entlang dem Basisteil (122) verschiebbare Bridenmagazin (106) mit einem am Basisteil (122) geführten antreibbaren Schlitten (128) vorzugsweise über wenigstens eine Rastkupplung (132) koppelbar ist.

21. Bridenwagen nach einem der Ansprüche 15 bis 20, dadurch gekennzeichnet, dass die Briden (12) durch wenigstens ein am Bridenmagazin (106) in dessen Längsrichtung verschiebbar geführtes Förderorgan (134) vereinzelbar sind und das Förderorgan (134) mit am Schlitten (128) gelagerten Antriebsmitteln (136, 138) vorzugsweise über wenigstens eine Rastkupplung (140) koppelbar und durch diese Antriebsmittel (136, 138) relativ zum Schlitten (128) bewegbar ist.

22. Bridenwagen nach einem der Ansprüche 15 bis 21, dadurch gekennzeichnet, dass er ein Fahrgestell (120) umfaßt, daß das vorzugsweise mit dem Setzmodul (30) der Montagevorrichtung (10) koppelbare Basisteil (122) relativ zu dem Fahrgestell (120) um eine sich in Längsrichtung erstreckende Achse drehbar ist und daß das Basisteil (122) zum Verfahren mit dem Fahrgestell (120) drehfest verriegelbar ist.

## Claims

1. Device (10) for mounting an inner sleeve (12) in a pipe (14) not accessible on foot, with a frame (16) that can be supported on the inner wall (14') of the pipe so as to be movable in the longitudinal direction (R) of the pipe, a sleeve setting head (64) which is arranged radially movably on the frame (16) in relation to its longitudinal direction (18') and can be engaged with a section (58) of the inner sleeve (12), and a pinion (88) which can be engaged with a further section (12') of the inner sleeve (12) for expanding the inner sleeve (12), and respective drive means (66, 72, 74) by which for mounting the inner sleeve (12) by expansion the sleeve setting head (64) is movable radially outwards and the pinion (88) can be set in rotation.

2. Device according to claim 1, characterised in that the pinion (88) is pivotable in and out relative to the sleeve setting head (64) by drive means (74), preferably in a plane running at right angles to the longitudinal direction (18') of the frame (16).

3. Device according to claim 1, characterised by support elements (40, 42) which are movable from a rest position into a support position in which they abut against the inner wall (14') of the pipe and keep the longitudinal axis (18') of the device (16) at least approximately in the centre axis of the pipe (14).

4. Device according to one of the preceding claims, characterised in that the frame (16) includes a self-propelled sewer robot vehicle (18) which is provided with a rotating device (26) for rotation of the sleeve setting head (64) about the longitudinal axis (18').

5. Device according to one of the preceding claims, characterised in that the radially movable sleeve setting head (64) is mounted in or on a sleeve setting module (30) which preferably can be attached to the rotating device (26) of the sewer robot vehicle (18).

6. Device according to claim 5, characterised in that the support elements (40, 42) are arranged on the sleeve setting module (30).

7. Device according to claim 5 or 6, characterised in that at least part of the respective drive means (66, 66; 72, 74; 50, 50') is provided in or on the sleeve setting module (30) for the radially movable sleeve setting head (64), the pivotable pinion (88) and/or the support elements (40, 42).

8. Device according to claim 7, characterised in that the pinion (88) is mounted pivotably in or on the sleeve setting head (64).

9. Device according to claims 7 and 8, characterised in that the pivotable pinion (88) is pivotable in and out by a piston and cylinder unit (74) arranged in or on the sleeve setting head (64) and set in rotation by a motor (72) arranged in or on the sleeve setting head (64).

10. Device according to one of the preceding claims, characterised in that it can be coupled to a sleeve car (11) that can be equipped with a respective sleeve magazine (106).

11. Device according to claim 10, characterised in that the coupling portion (80) associated with it and cooperating with a complementary coupling portion (108) of the sleeve car (11) is arranged on the sleeve setting module (30).

12. Device according to claim 10 or 11, characterised in that it can be coupled to the sleeve car (11) in such a way that the latter is pivotable relative to it through about 90° into a substantially upright position, for respective magazine changing.

13. Device according to one of claims 10 to 12, characterised in that means (110, 111) are provided for automatic disconnection and automatically restoring respective electrical and pneumatic connections to the sleeve car (11).

14. Sleeve car (11), characterised in that it is coupled to a device for mounting an inner sleeve (12) in a pipe (14) not accessible on foot according to one of claims 1 to 13.

15. Sleeve car according to claim 14, characterised in that it can be equipped with a respective exchangeable sleeve magazine (106).

16. Sleeve car according to claim 15, characterised in that it includes a base portion (122) which serves to receive a respective sleeve magazine (106) and along which the sleeve magazine (106) is slidable.

17. Sleeve car according to claim 15 or 16, characterised in that means (126) are provided for moving the respective sleeve magazine (106) relative to the base portion (122) in its longitudinal direction between a rest position and a transfer position in which the foremost sleeve (12) closest to the setting head (30) is transferable to the setting head (64).

18. Sleeve car according to claim 17, characterised in that means (134) are provided for separating for transfer the foremost sleeve (12) closest to the setting head (64) and for sliding it over the setting head (64).

19. Sleeve car according to one of claims 15 to 18, characterised in that the sleeves (12) are slidable in the longitudinal direction of the sleeve magazine (106) relative to the latter.

20. Sleeve car according to one of claims 15 to 19, characterised in that the sleeve magazine (106) which is slidable along the base portion (122) can be coupled, preferably by at least one latch coupling (132), to a drivable carriage (128) guided on the base portion (122).

21. Sleeve car according to one of claims 15 to 20, characterised in that the sleeves (12) can be separated by at least one conveying member (134) guided slidably on the sleeve magazine (106) in its longitudinal direction, and the conveying member (134) can be coupled, preferably by at least one latch coupling (140), to drive means (136, 138) mounted on the carriage (128), and moved by these drive means (136, 138) relative to the carriage (128).

22. Sleeve car according to one of claims 15 to 21, characterised in that it includes a chassis (120), in that the base portion (122) which can preferably be coupled to the setting module (30) of the mounting device (10) is rotatable relative to the chassis (120) about an axis extending in the longitudinal direction and in that the base portion (122) is lockable non-rotatably to the chassis (120) for travel.

## Revendications

1. Dispositif de montage (10) d'une bride ou étrier intérieur(e) (12) dans un tube (14) non praticable ou n'étant pas à dimension d'homme, avec un bâti (16) susceptible de prendre appui, de façon mobile dans la direction longitudinale tubulaire (R), sur la paroi intérieure tubulaire (14'), une tête de pose de bride (64), disposée de façon déplacable radialement sur le bâti (16) par rapport à sa direction longitudinale (18'), susceptible d'être mise en prise avec un tronçon (58) de la bride intérieure (12), ainsi qu'un pignon (88) susceptible d'être mis en prise avec un autre tronçon (12') de la bride intérieure (12), afin d'élargir la bride intérieure (12), et des moyens d'entraînement (66, 72, 74) respectifs ,au moyen desquels, pour effectuer le montage de la bride intérieure (12) par élargissement, la tête de pose de bride (64) est déplacable radialement vers l'extérieur et le pignon (88) est susceptible d'être mis en rotation.

2. Dispositif selon la revendication 1, caractérisé en ce que le pignon (88) est susceptible d'être déployé et rétracté à l'aide de moyens d'entraînement (74), de préférence dans un plan perpendiculaire à la direction longitudinale (18') du bâti (16), par rapport à la tête de placement de bride (64).

3. Dispositif selon la revendication 1, caractérisé par des éléments d'appui (40, 42) déplaçables d'une position de repos à une position d'appui, dans laquelle ils appuient sur la paroi intérieure de tube (14') et maintiennent l'axe longitudinal (18') du dispositif (16) au moins à peu près dans l'axe médian du tube (14).

4. Dispositif selon l'une des revendications précédentes, caractérisé en ce que le bâti (16) comprend un véhicule formant robot pour canalisation (18) automobile, muni d'un dispositif de rotation (26) pour faire tourner la tête de placement de bride (64) autour de l'axe longitudinal (18').

5. Dispositif selon l'une des revendications précédentes, caractérisé en ce que la tête de placement de bride (64) déplacable radialement est montée dans ou sur un module de placement de bride (30), de préférence susceptible d'être appliqué sur le dispositif de rotation (26) du véhicule formant robot pour canalisation (18).

6. Dispositif selon la revendication 5, caractérisé en ce que les éléments d'appui (40, 42) sont disposés sur le module de placement de bride (30).

7. Dispositif selon la revendication 5 ou 6, caractérisé en ce qu'au moins une partie des moyens d'entraînement (66, 66; 72, 74; 50, 50') respectifs, prévus pour la tête de placement de bride (64) déplacable, le pignon (68) susceptible de pivoter et/ou les éléments d'appui (40, 42), est prévue dans ou sur le module de placement de bride (30).

8. Dispositif selon la revendication 7, caractérisé en ce que le pignon (88) est monté de façon à pouvoir pivoter dans ou sur la tête de placement de bride (64).

9. Dispositif selon les revendications 7 et 8, caractérisé en ce que le pignon (88) susceptible d'être pivoté est susceptible d'être déployé et rétracté par pivotement par l'intermédiaire d'un ensemble à piston/cylindre (74) disposé dans ou sur la tête de placement de bride (64) et est susceptible d'être mis en rotation au moyen d'un moteur (72) disposé dans ou sur la tête de placement de bride (64).

10. Dispositif selon l'une des revendications précédentes, caractérisé en ce qu'il est susceptible d'être accouplé à un chariot à brides (11) pouvant être garni d'un magasin à brides (106) respectif.

11. Dispositif selon la revendication 10, caractérisé en ce que la partie d'accouplement (80), lui étant associée, coopérant avec une partie d'accouplement (108) complémentaire du chariot à brides (11), est disposée sur le module de placement de bride (30).

12. Dispositif selon la revendication 10 ou 11, caractérisé en ce qu'il est susceptible être accouplé au chariot à brides (11), de manière que celui-ci soit susceptible d'être pivoté par rapport à lui d'environ 90°, en une position sensiblement verticale, pour procéder à un changement de magasin respectif.

13. Dispositif selon l'une des revendications 10 à 12, caractérisé en ce que des moyens (110, 111), permettant une séparation automatique et un réétablissement automatique des liaisons électriques et pneumatiques respectives au chariot à brides (11), sont prévus.

14. Chariot à brides (11) caractérisé en ce qu'il est couplé à un dispositif pour le montage d'une bride intérieure (12) dans un tube (14) non praticable, selon l'une des revendications 1 à 13.

15. Chariot à brides selon la revendication 14, caractérisé en ce qu'il est susceptible d'être équipé d'un magasin à brides (106) respectif interchangeable.

16. Chariot à brides selon la revendication 15, caractérisé en ce qu'il comprend une partie de base (122) servant au logement d'un magasin à brides (106) respectif, partie de base le long de laquelle le magasin à brides (106) est déplacable.

17. Chariot à brides selon la revendication 15 ou 16, caractérisé en ce que sont prévus des moyens (126) pour déplacer le magasin à brides (106) concerné par rapport à la partie de base (122) dans sa direction longitudinale, entre une position de repos et une position de transfert, dans laquelle la bride (12), la plus à l'avant chaque fois contre la suivante sur le module de placement (30), est susceptible d'être transférée à la tête de placement (64).

18. Chariot à brides selon la revendication 17, caractérisé en ce que sont prévus des moyens (134) pour effectuer l'individualisation de la bride (12), la plus à l'avant chaque fois contre la suivante, en vue du transfert à la tête de bride (64) et pour la pousser sur la tête de bride de placement (64).

19. Chariot à brides selon l'une des revendications 15 à 18, caractérisé en ce que les brides (12) sont déplaçables dans la direction longitudinale du magasin à brides (106), par rapport à celui-ci.

20. Chariot à brides selon l'une des revendications 15 à 19, caractérisé en ce que le magasin à brides (106), déplacable le long de la partie de base (122), est susceptible d'être accouplé, de préférence par l'intermédiaire d'au moins un accouplement à encliquetage (132), à un chariot (128) susceptible d'être entraîné, guidé sur la partie de base (122).

21. Chariot à brides selon l'une des revendications 15 à 20, caractérisé en ce que les brides (12) sont individualisables, à l'aide d'au moins un organe de transfert (134), guidé de façon déplacable sur le magasin à brides (106) dans sa direction longitudinale, et l'organe de transfert (134) est susceptible d'être accouplé, de préférence par l'intermédiaire d'au moins un accouplement à encliquetage (140), à des moyens d'entraînement (136, 138) montés sur le chariot (128) et susceptible d'être déplacé par rapport au chariot (128), au moyen de ces moyens d'entraînement (136, 138).

22. Chariot à brides selon l'une des revendications 15 à 21, caractérisé en ce qu'il comprend un bâti de roulage (120), en ce que la partie de base (122), de préférence susceptible d'être accouplée au module de placement (30) du dispositif de montage (10), est susceptible d'être tournée autour d'un axe s'étendant en direction longitudinale, par rapport au bâti de roulage (30), et en ce que la partie de base (122) est verrouillable de façon bloquée en rotation, pour un déplacement avec le bâti de roulage (120).
